# EUROPEAN PATENT APPLICATION

(11) **EP 4 787 887 A1**
(43) Date of publication of application: **05.08.2026**
(21) Application number: 24881124.2
(22) Date of filing: 24.07.2024
(51) Int. Cl.: H04Q 11/00

(54) **DATA TRANSMISSION METHOD, MASTER GATEWAY, SLAVE GATEWAY, AND DATA TRANSMISSION SYSTEM**

(30) Priority: 24.10.2023 CN 202311391813
(71) Applicant: HUAWEI TECHNOLOGIES CO., LTD., Shenzhen 518129 (CN)
(72) Inventor: LI, Yanchun, Shenzhen, Guangdong 518129 (CN); ZHI, Meipeng, Shenzhen, Guangdong 518129 (CN); WU, Weimin, Shenzhen, Guangdong 518129 (CN)
(74) Representative: Goddar, Heinz J.
(86) International application number: PCT/CN2024/107258
(87) International publication number: WO 2025/086753

(57) **Abstract**

Embodiments of this application are applied to the field of communication technologies and disclose a data transmission method, a primary gateway, a secondary gateway, and a data transmission system, to implement waveform information transmission. The method in embodiments of this application includes: A primary gateway generates a first packet, where the first packet includes a payload and cyclic shift diversity CSD information, the CSD information includes first CSD information, and the first CSD information indicates time at which a first secondary gateway sends a second packet to user equipment; and the primary gateway sends the first packet to an optical splitter, where the optical splitter is configured to send the first packet obtained through optical splitting to each of a plurality of secondary gateways, and the first secondary gateway is one of the plurality of secondary gateways. Embodiments of this application can effectively reduce consumption of compute, storage, and signaling resources.

## Description

This application claims priority to Chinese Patent Application No. 202311391813.3, filed with the China National Intellectual Property Administration on October 24, 2023 and entitled "DATA TRANSMISSION METHOD, PRIMARY GATEWAY, SECONDARY GATEWAY, AND DATA TRANSMISSION SYSTEM", which is incorporated herein by reference in its entirety.

### TECHNICAL FIELD

Embodiments of this application relate to the field of communication technologies, and in particular, to a data transmission method, a primary gateway, a secondary gateway, and a data transmission system.

### BACKGROUND

Fiber to the room (fiber to the room, FTTR) is to lay optical fibers in each room through an edge optical network terminal (edge optical network terminal, Edge ONT). An FTTR optical gateway is deployed in the home, and a primary gateway as a core is connected to ethernet ports of a plurality of edge ONTs for downstream signaling transmission, to achieve full network coverage. Different secondary gateways are deployed in various rooms, and independently handle user access and uplink and downlink traffic processing.

In the conventional technology, a media access control layer (media access control Layer, MAC Layer) of the primary gateway generates a broadcast packet. The MAC layer or a physical layer (physical Layer, PHY Layer) of the primary gateway duplicates the broadcast packet. The MAC layer sends the packet to the PHY layer. The PHY layer performs cyclic shift diversity (cyclic shift diversity, CSD) processing to generate a plurality of pieces of data. The secondary gateways send the plurality of pieces of data through different antennas respectively, to provide highly reliable network transmission.

A packet data duplication operation performed by the primary gateway consumes a large quantity of compute and storage resources. Moreover, as the primary gateway needs to send packets to the secondary gateways a plurality of times, consumption of signaling resources is increased.

### SUMMARY

Embodiments of this application provide a data transmission method, a primary gateway, a secondary gateway, and a data transmission system, to implement packet transmission and effectively reduce consumption of compute, storage, and signaling resources.

A first aspect of embodiments of this application provides a data transmission method. In the method, a primary gateway is connected to a secondary gateway through an optical fiber, the primary gateway generates a payload and CSD information that are carried in a first packet, and the CSD information includes at least first CSD information that indicates sending time of a first secondary gateway. The CSD information includes sending time of target antennas of a plurality of secondary gateways. The target antenna is an antenna that is of the secondary gateway and that participates in sending information. The sending time may be absolute sending time of each target antenna, or may be relative sending time relative to one of the target antennas. The primary gateway is connected to an optical splitter. The primary gateway sends the first packet to the optical splitter, and the optical splitter performs optical splitting on the received first packet and simultaneously sends the first packets obtained through optical splitting to the plurality of secondary gateways through optical fibers connected to the secondary gateways.

In this implementation, the primary gateway sends the first packet to the optical splitter, the optical splitter performs optical splitting on the first packet to obtain a plurality of same first packets, and the optical splitter sends the first packets to the plurality of secondary gateways through output ports. Because the optical splitter generates the plurality of same first packets, the primary gateway does not need to generate different packets for different secondary gateways or send the packets a plurality of times. Therefore, a quantity of times that the primary gateway sends the packet is reduced, and consumption of signaling resources is reduced.

In some optional implementations, the payload generated by the primary gateway includes a digital waveform representation, and the digital waveform representation is used by the secondary gateway or the primary gateway to generate waveform information.

In this implementation, a workload for the secondary gateway to generate the waveform information based on the digital waveform representation is reduced, to improve data transmission efficiency.

In some optional implementations, the primary gateway generates waveform information based on the payload, and sends a second packet to user equipment through an antenna of the primary gateway. Specifically, the CSD information generated by the primary gateway includes the first CSD information and second CSD information. The primary gateway indicates, based on the first CSD information, an antenna of the first secondary gateway to send the second packet to the user equipment, and indicates, based on the second CSD information, the antenna of the primary gateway to send the second packet to the user equipment.

In this implementation, the primary gateway participates in packet transmission. This increases a quantity of sending devices, to improve packet transmission efficiency and enhance signal transmission power.

In some optional implementations, the secondary gateways that participate in sending include the first secondary gateway and a second secondary gateway. The primary gateway receives first target duration sent by the first secondary gateway and second target duration sent by the second secondary gateway. The first target duration indicates duration required for the first secondary gateway to send a signal to the user equipment, and the second target duration indicates duration required for the second secondary gateway to send a signal to the user equipment. The primary gateway determines third CSD information of the second secondary gateway based on the first target duration, the second target duration, and the first CSD information.

Specifically, the first CSD information and the third CSD information that are generated by the primary gateway cause a signal sent from the first secondary gateway and a signal sent from the second secondary gateway to arrive at the user equipment at different time.

In this implementation, the third CSD information is determined based on the first target duration, the second target duration, and the first CSD information, to avoid occurrence of beam coherence during transmission of signals sent by two secondary gateways due to a relative distance and a sending delay between the two secondary gateways.

In some optional implementations, the first packet generated by the primary gateway includes a target identifier, and the target identifier indicates a first antenna that is in all antennas of the secondary gateways and that participates in sending the second packet. The target identifier includes a first antenna identifier, and the first antenna identifier indicates that the first antenna is an antenna that participates in sending the second packet. The secondary gateway in which the first antenna is located sends, to the user equipment based on the CSD information through the first antenna, the waveform information generated based on the payload.

In some optional implementations, the first packet includes a target identifier, the target identifier includes a target secondary gateway identifier and a second antenna identifier, the target secondary gateway identifier indicates the first secondary gateway that participates in packet transmission, and the second antenna identifier indicates a second antenna that is of the first secondary gateway and that is used to send the second packet.

In this embodiment of this application, the primary gateway does not need to send the second packet to the user equipment through all antennas of the secondary gateways, but only needs to determine, based on the target identifier, the secondary gateway and the antenna that participate in packet transmission, and uses some antennas to participate in packet sending, eliminating a need to wait for all the antennas to complete sending, to reduce a network delay and improve transmission efficiency.

In some optional implementations, the primary gateway determines, based on network information sent by the secondary gateways, secondary gateways or antennas that need to participate in sending the second packet. The primary gateway receives first network information sent by the secondary gateways. The first network information includes quality of a channel from each antenna of the plurality of secondary gateways to the user equipment.

Specifically, the primary gateway selects antennas whose channel quality is greater than a preset value as antennas that participate in data transmission, and secondary gateways in which these antennas are located are secondary gateways that participate in packet transmission.

In this implementation, the primary gateway selects, based on the channel quality, the secondary gateway and the antenna that are used to send the second packet, to reduce a possibility that an air interface conflict occurs on a network.

In some optional implementations, the primary gateway further receives second network information from the first secondary gateway. The second network information includes a channel busy/idle state of each antenna of the first secondary gateway. The primary gateway determines the target identifier based on the second network information.

In some optional implementations, the primary gateway selects antennas whose channel states are an idle state as antennas that participate in data transmission, and secondary gateways in which these antennas are located are secondary gateways that participate in data transmission.

In this implementation, the primary gateway determines, based on the channel busy/idle state, the secondary gateway and the antenna that are used to send the second packet, to reduce a delay caused by packet buffering during packet transmission, and improve transmission efficiency.

A second aspect of embodiments of this application provides a data transmission method. In the method, each secondary gateway receives a first packet sent by a primary gateway, where the first packet includes CSD information and a payload. The secondary gateway generates a second packet based on the payload, and determines sending time of the second packet based on the CSD information. The secondary gateway sends the second packet to user equipment based on the sending time indicated by the CSD information.

In some optional implementations, the payload received by the secondary gateway includes a digital waveform representation, and the second packet includes waveform information; and the secondary gateway may obtain the waveform information based on the digital waveform representation, and then the secondary gateway sends the waveform information to the user equipment.

In this embodiment of this application, the secondary gateway sends the waveform information through CSD processing, so that waveform information of a plurality of secondary gateways can be superimposed, to enhance signal transmission efficiency.

In some optional implementations, the secondary gateway may send target duration to the primary gateway, where the target duration indicates duration required for an antenna of the secondary gateway to send a signal to the user equipment.

In some optional implementations, before receiving the CSD information and the payload, the secondary gateway sends first network information to the primary gateway, where the first network information includes quality of a channel from each antenna of the secondary gateway to the user equipment.

In some optional implementations, the secondary gateway may further send second network information to the primary gateway, where the second network information includes a channel busy/idle state of each antenna of the secondary gateway.

A third aspect of embodiments of this application provides a primary gateway, including:
a generation unit, configured to generate a payload and cyclic shift diversity CSD information, where the CSD information includes first CSD information, and the first CSD information indicates time at which a first secondary gateway sends the payload; and
a sending unit, configured to send the payload and the CSD information to each of a plurality of secondary gateways, where the first secondary gateway is one of the plurality of secondary gateways.

A fourth aspect of embodiments of this application provides a secondary gateway, including:
a receiving unit, configured to receive CSD information and a payload from a primary gateway, where the CSD information includes first CSD information, and the first CSD information indicates time at which a first secondary gateway sends the payload; and
a sending unit, configured to send the payload to user equipment based on the CSD information.

A fifth aspect of embodiments of this application provides a primary gateway, including:
a processor and a memory, where the processor is coupled to the memory;
the memory is configured to store a program; and
the processor is configured to execute the program in the memory, to cause the primary gateway to perform the method according to the first aspect.

A sixth aspect of embodiments of this application provides a secondary gateway, including:
a processor and a memory, where the processor is coupled to the memory;
the memory is configured to store a program; and
the processor is configured to execute the program in the memory, to cause the secondary gateway to perform the method according to the second aspect.

A seventh aspect of embodiments of this application provides a data transmission system, including:
an optical splitter, the primary gateway according to the first aspect, and the secondary gateway according to the second aspect.

An eighth aspect of embodiments of this application provides a computer-readable storage medium, including instructions. When the instructions are run on a computer, the computer is caused to perform the method according to the first aspect, or the computer is caused to perform the method according to the second aspect.

### BRIEF DESCRIPTION OF DRAWINGS

FIG. 1 is a diagram of a system architecture according to an embodiment of this application;
FIG. 2 is an architectural diagram of an embodiment of a data transmission method according to an embodiment of this application;
FIG. 3 is a diagram of an embodiment of a data transmission method according to an embodiment of this application;
FIG. 4 is a diagram of a structure of a primary gateway according to an embodiment of this application;
FIG. 5 is a diagram of sending a signal by a secondary gateway to user equipment according to an embodiment of this application;
FIG. 6 is a diagram of a packet data format according to an embodiment of this application;
FIG. 7 is a diagram of a structure of a secondary gateway according to an embodiment of this application;
FIG. 8 is an architectural diagram of another embodiment of a data transmission method according to an embodiment of this application;
FIG. 9 is a diagram of another embodiment of a data transmission method according to an embodiment of this application;
FIG. 10 is a diagram of an embodiment of a primary gateway according to an embodiment of this application;
FIG. 11 is a diagram of an embodiment of a secondary gateway according to an embodiment of this application;
FIG. 12 is a diagram of another embodiment of a primary gateway according to an embodiment of this application; and
FIG. 13 is a diagram of another embodiment of a secondary gateway according to an embodiment of this application.

### DESCRIPTION OF EMBODIMENTS

Embodiments of this application provide a data transmission method, a primary gateway, a secondary gateway, and a data transmission system, to implement packet transmission and effectively reduce consumption of compute, storage, and signaling resources.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, the claims, and the accompanying drawings of this application, the terms "first", "second", and the like are intended to distinguish between similar objects but do not necessarily indicate a specific order or sequence. It should be understood that the terms used in such a way are interchangeable in appropriate circumstances. This is merely a distinguishing manner that is used when objects having a same attribute are described in embodiments of this application. In addition, the terms "include", "contain", and any other variants thereof mean to cover a non-exclusive inclusion, so that a process, a method, a system, a product, or a device that includes a series of units is not necessarily limited to those units, but may include other units not expressly listed or inherent to such a process, method, product, or device.

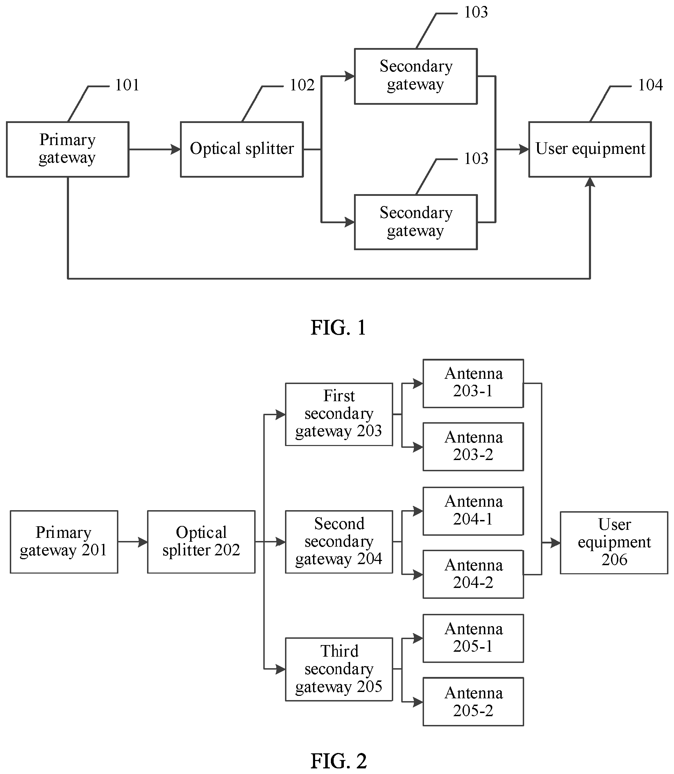

Refer to FIG. 1. The following briefly describes a system architecture on which a data transmission method in embodiments of this application is based.

The architecture is an FTTR architecture. A primary gateway 101 is connected to an optical line terminal (optical line terminal, OLT) device based on a passive optical network (passive optical network, PON) protocol. Based on a point-to-multipoint PON protocol, the primary gateway 101 is connected, through one PON optical interface and one or more stages of optical splitters 102, to secondary gateways 103 in a plurality of rooms, and a quantity of secondary gateways and a quantity of optical splitters can be extended on demand according to user requirements. In this architecture, the primary gateway 101 may indicate a plurality of secondary gateways 103 to send packets to user equipment 104, or the primary gateway 101 and the secondary gateways 103 may send packets to the user equipment 104.

Based on the foregoing architecture, in this embodiment of this application, in an upper-layer protocol stack, control information is sent to the primary gateway, and the primary gateway generates a payload based on the control information. The primary gateway collects network information in the FTTR architecture, and determines, based on the network information, a target secondary gateway that participates in packet transmission. The primary gateway generates a first packet. The first packet includes CSD information, the payload, and a target identifier. The CSD information indicates sending time of a plurality of antennas. The target identifier indicates secondary gateways or antennas that are used to participate in packet transmission. The primary gateway sends the payload and the CSD information to each secondary gateway. After receiving the payload and the CSD information, the secondary gateway generates waveform information based on the payload, determines the sending time based on the CSD information, and sends the waveform information to the user equipment at the sending time through the antenna.

In practice, the primary gateway may broadcast a management frame to the user equipment through the secondary gateway, where the management frame indicates management configuration information to the user equipment, or the primary gateway may send a beacon frame to the user equipment through the secondary gateway, where the beacon frame is used to announce existence of a device in a wireless local area network and perform device and service synchronization. For example, when the user equipment enters a signal range of the primary gateway or the secondary gateway, the user equipment receives a beacon frame broadcast by the primary gateway or the secondary gateway, to establish a connection to the primary gateway or the secondary gateway and obtain a service provided by the primary gateway or the secondary gateway.

There may be a plurality of manners in which the primary gateway indicates the secondary gateway to send a signal to the user equipment. In practice, one primary gateway may be connected to a plurality of secondary gateways, and each secondary gateway has a plurality of antennas. An example in which one primary gateway is connected to three secondary gateways and each secondary gateway has two antennas is used below for description.
1. The primary gateway indicates the antennas of the secondary gateways to send signals to the user equipment.

FIG. 2 shows an architecture of an embodiment of a data transmission method according to an embodiment of this application. In this embodiment of this application, a primary gateway 201 is connected to an optical splitter 202. The primary gateway 201 sends a first packet to the optical splitter 202. The optical splitter 202 then sends the first packets obtained through optical splitting to a first secondary gateway 203, a second secondary gateway 204, and a third secondary gateway 205. The first secondary gateway 203 has an antenna 203-1 and an antenna 203-2. The second secondary gateway has an antenna 204-1 and an antenna 204-2. The third secondary gateway has an antenna 205-1 and an antenna 205-2. The primary gateway collects network information from a plurality of secondary gateways, and determines, based on the network information, that an antenna whose channel quality is greater than a preset value and whose channel state is an idle state is used to send a signal. The antenna 203-1 and the antenna 204-2 are used as an example. The primary gateway 201 may send target identifiers to the secondary gateways, to indicate the secondary gateway 203, the secondary gateway 204, the antenna 203-1, and the antenna 204-2 to send second packets to user equipment 206.

In practice, the optical splitter may be connected to the plurality of secondary gateways, and each secondary gateway may also have a plurality of antennas. This is not specifically limited herein.

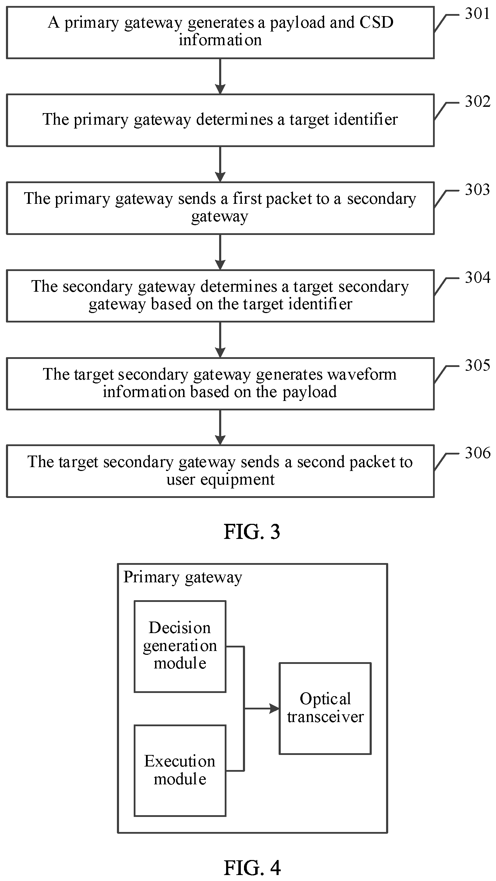

Refer to FIG. 3. A data transmission method according to an embodiment of this application includes the following steps.

301: A primary gateway generates a payload and CSD information.

FIG. 4 is a diagram of a structure of a primary gateway according to an embodiment of this application.

The primary gateway calculates CSD information of each antenna by using a control decision module, performs channel coding and modulation on data by using an execution module, to obtain a corresponding digital signal, and then converts the digital signal into a digital waveform representation. The data may be data received by the primary gateway from the Internet, or may be data generated by the primary gateway. This is not specifically limited herein. The digital waveform representation may be a quantized representation of a time domain waveform, or may be a quantized representation of a frequency domain waveform. This is not specifically limited herein.

The CSD information may be absolute sending time of all antennas, or may be relative delay time of all antennas relative to any one of the antennas. When the CSD information is the absolute sending time of all antennas, the CSD information indicates a specific sending moment of each antenna. For example, sending time of the antenna 203-1 is 00:00, sending time of the antenna 203-2 is 00:10, sending time of the antenna 204-1 is 00:20, sending time of the antenna 204-2 is 00:30, sending time of the antenna 205-1 is 00:40, and sending time of the antenna 205-2 is 00:50.

In a possible implementation, a first antenna is any one of all antennas of secondary gateways, and a second antenna is an antenna other than the first antenna in all the antennas of the secondary gateways. When the CSD information is relative sending time of the second antenna relative to the first antenna, the CSD information includes delay time of each second antenna relative to the first antenna. For example, if the antenna 203-1 is used as the first antenna, and the sending time of the antenna 203-1 is 00:00, the sending time of the antenna 203-2 is 10 nanoseconds after sending of the antenna 203-1, the sending time of the antenna 204-1 is 20 nanoseconds after the sending of the antenna 203-1, the sending time of the antenna 204-2 is 30 nanoseconds after the sending of the antenna 203-1, the sending time of the antenna 205-1 is 40 nanoseconds after the sending of the antenna 203-1, and the sending time of the antenna 205-2 is 50 nanoseconds after the sending of the antenna 203-1.

In practice, the primary gateway receives first target duration from the first secondary gateway and second target duration from the second secondary gateway, where the target duration indicates duration required for the secondary gateway to send a signal to the user equipment. Because distances between the secondary gateways and the user equipment are different, it is possible that beam coherence still occurs when antennas of two different secondary gateways send signals at different time.

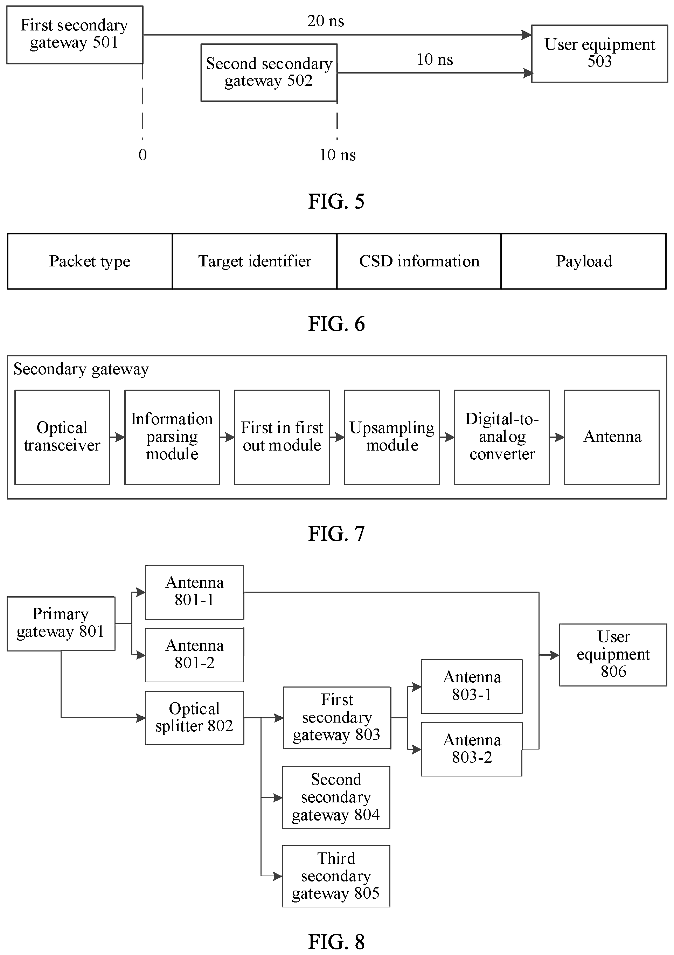

FIG. 5 is a diagram of sending a signal from a secondary gateway to user equipment according to an embodiment of this application.

Duration required for a first secondary gateway 501 to send a signal to user equipment 503 is 20 nanoseconds, duration required for a second secondary gateway 502 to send a signal to the user equipment 503 is 10 nanoseconds, delay time of the second secondary gateway 502 relative to the first secondary gateway 501 is 10 nanoseconds, and total duration required for the second secondary gateway to send a signal is also 20 nanoseconds. Consequently, beam coherence may occur between the signal sent by the first secondary gateway 501 and the signal sent by the second secondary gateway 502. Therefore, the primary gateway needs to adjust CSD information of the first secondary gateway 501 or CSD information of the second secondary gateway 502, so that the signals sent by the two gateways arrive at the user equipment at different time, and a difference between arrival time of the signals of the two gateways at the user is greater than a delay spread in a channel environment. The delay spread is a difference between a maximum transmission delay and a minimum transmission delay, that is, a difference between arrival time of a last identifiable delay signal and arrival time of a first delay signal, namely, pulse broadening time, and is related to a channel transmission environment of a current system. Delay spreads of the primary gateway and the secondary gateways may be preset, or may be obtained by the primary gateway through accurate calculation.

302: The primary gateway determines a target identifier.

The primary gateway receives network information from a plurality of secondary gateways. The network information includes network information such as a network topology, a data packet buffer status of each secondary gateway, and a channel state of an antenna. The network topology includes a connection manner and a physical layout between the primary gateway and the secondary gateway. The data packet buffer status includes a quantity of data packets that have arrived at each secondary gateway. The channel state of the antenna indicates a busy/idle state of the antenna of the secondary gateway. The primary gateway determines, based on the network information, antennas that are used to send second packets. The target identifier may include only a first antenna identifier, or may include a target secondary gateway identifier and a second antenna identifier.

In practice, the primary gateway may select an antenna of a secondary gateway that has good channel quality as a target antenna. For example, if channel quality of the antenna 203-1 is greater than a preset value, the primary gateway determines that the antenna 203-1 is one of antennas that participate in packet transmission, or if channel quality of the antenna 203-1 is greater than channel quality of the antenna 203-2, the primary gateway determines that the antenna 203-1 is one of antennas that participate in packet transmission. Alternatively, the primary gateway may select an antenna of a secondary gateway that is in an idle state, or may select a secondary gateway whose physical location is close to the user equipment. This is not specifically limited herein.

The primary gateway determines the target identifier based on the determined antenna. The target identifier is used to mark an antenna that participates in packet sending. If a packet includes the target secondary gateway identifier and the second antenna identifier, the antenna identifier indicates an antenna of the secondary gateway that participates in packet transmission. For example, if the target secondary gateway identifier indicates the secondary gateway 203, that is, the secondary gateway 203 participates in packet transmission, the second antenna identifier indicates the antenna 203-1 or the antenna 203-2 of the secondary gateway 203. If the target identifier includes only the first antenna identifier, the first antenna identifier indicates sequence numbers of all antennas. For example, the antenna 203-1 is an antenna 1, the antenna 204-2 is an antenna 4, the antenna 1 and the antenna 4 participate in packet transmission, and secondary gateways in which the antenna 1 and the antenna 4 are located receive the first packet.

The first antenna identifier is a string of binary digits, and indicates an antenna that is of the secondary gateway and that participates in data sending. For example, 001001 indicates that the antenna 203-1 of the first secondary gateway 203 and the antenna 204-2 of the second secondary gateway 204 need to participate in sending, and none of the antenna 203-2, the antenna 204-1, the antenna 205-1, and the antenna 205-2 participates in sending.

The target secondary gateway identifier is a string of binary digits, and is used to specify secondary gateways that need to participate in data sending. Logic 1 indicates that the secondary gateway needs to participate in sending, and logic 0 indicates that the secondary gateway does not participate in sending. FIG. 2 is used as an example. 011 indicates that the first secondary gateway 203 and the second secondary gateway 204 participate in data sending, and the third secondary gateway 205 does not participate in data sending. The second antenna identifier indicates an antenna of the first secondary gateway 203 and an antenna of the second secondary gateway 204.

303: The primary gateway sends the first packet to the secondary gateway.

The primary gateway sends a packet type, the target identifier, the payload, and the CSD information to the secondary gateway by using a packet.

FIG. 6 shows a format of a packet sent by a primary gateway according to an embodiment of this application.

The packet includes a packet type, a target identifier, CSD information, and a payload. The packet type includes a unicast packet, a multicast packet, and a broadcast packet, and the packet type indicates a data sending manner to be used by the secondary gateway. The target identifier may include only the first antenna identifier, or may include the target secondary gateway identifier and the second antenna identifier.

The primary gateway packages the payload, the CSD information, and the target identifier into a packet. A decision generation module of the primary gateway sends an encapsulated packet to the execution module. The execution module performs CSD processing and sends a generated packet to an optical transceiver. The optical transceiver converts an electrical signal into an optical signal, and sends data through an optical fiber to an optical splitter. The optical splitter performs optical splitting on the received optical signal to obtain a plurality of optical signals, and sends the plurality of optical signals to an optical transceiver of the secondary gateway through output ports.

In this embodiment of this application, based on an optical splitter in an FTTR architecture, the primary gateway sends a packet to the optical splitter once, and a plurality of secondary gateways can receive the packet. This reduces a quantity of times that the primary gateway sends the packet, to reduce consumption of signaling resources.

304: The secondary gateway determines a target secondary gateway based on the target identifier.

Because the optical splitter sends the payload and the CSD information to all secondary gateways, when receiving the target identifier, the secondary gateway determines, based on the target secondary gateway identifier, whether the secondary gateway is a secondary gateway that participates in data sending, or determines, based on the antenna identifier, whether the secondary gateway has an antenna that participates in data sending. If the secondary gateway finds that the secondary gateway needs to participate in data sending, the secondary gateway receives the payload and the CSD information. The secondary gateway that does not need to participate in data sending discards the payload and the CSD information.

305: The target secondary gateway generates waveform information based on the payload.

FIG. 7 is a diagram of a structure of a secondary gateway according to an embodiment of this application.

The target secondary gateway receives a packet from the optical transceiver, extracts a packet type field of the packet by using an information parsing module, and determines, based on the field, whether a packet that needs to be sent is a unicast packet, a multicast packet, or a broadcast packet. Different packet types correspond to different data sending manners. The target secondary gateway then extracts the target identifier, the CSD information, and the payload by using the information parsing module. The target secondary gateway determines, based on the antenna identifier in the target identifier, an antenna that is of the secondary gateway and that participates in data transmission, and adjusts sending time of the antenna based on the CSD information. The target secondary gateway places the payload in a first in first out (first in first out, FIFO) module for buffering. After the buffering ends, the target secondary gateway inputs the payload into an upsampling module, and performs upsampling on a digital waveform representation included in the payload, to increase a sampling rate of an original digital signal. The primary gateway converts an upsampled signal into an analog signal by using a digital-to-analog converter, and obtains, based on the analog signal, waveform information to be sent. The waveform information includes a signal sequence, which may be a time domain signal sequence, or may be a multi-symbol frequency domain signal sequence.

306: The secondary gateway sends the second packet to the user equipment.

The secondary gateway sends, based on an indication of the CSD information and sending time of each antenna, the second packet to the user equipment through the antenna, where the second packet includes the waveform information.

In this implementation, the primary gateway sends the first packet to the optical splitter, the optical splitter performs optical splitting on the first packet to obtain a plurality of same first packets, and the optical splitter sends the first packets to the plurality of secondary gateways through the output ports. Because the optical splitter generates the plurality of same first packets, the primary gateway does not need to generate different packets for different secondary gateways or send the packets a plurality of times. Therefore, a quantity of times that the primary gateway sends the packet is reduced, and consumption of signaling resources is reduced.

2. Both the primary gateway and the secondary gateways need to send signals to the user equipment.

FIG. 8 shows an architecture of another embodiment of a data transmission method according to an embodiment of this application. In this embodiment of this application, a primary gateway 801 is connected to an optical splitter 802. The primary gateway 801 sends a payload and CSD information to the optical splitter 802, and the optical splitter 802 then sends the payload and the CSD information that are obtained through optical splitting to a first secondary gateway 803, a second secondary gateway 804, and a third secondary gateway 805. The primary gateway 801 has an antenna 801-1 and an antenna 801-2, and the primary gateway 801 may also send a signal to user equipment 806 through the antenna.

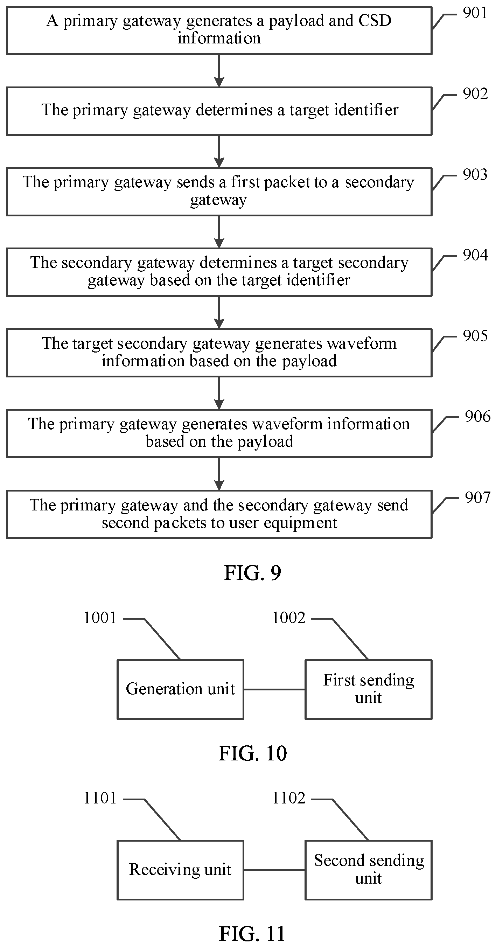

Refer to FIG. 9. A data transmission method according to an embodiment of this application includes the following steps.

901: A primary gateway generates a payload and CSD information.

902: The primary gateway determines a target identifier.

903: The primary gateway sends a first packet to a secondary gateway.

904: The secondary gateway determines a target secondary gateway based on the target identifier.

905: The target secondary gateway generates waveform information based on the payload.

Step 901 to step 905 in this embodiment are similar to step 301 to step 305 in the embodiment shown in FIG. 3. Details are not described again herein.

906: The primary gateway generates waveform information based on the payload.

The primary gateway may perform upsampling on the generated payload by using an execution module, convert the generated payload into a signal that is discrete in terms of time and an amplitude, and finally convert the payload into the waveform information by using a digital-to-analog converter.

907: The primary gateway and the secondary gateway send second packets to user equipment.

The antenna 801-1 of the primary gateway 801 and an antenna 803-2 of the first secondary gateway 803 participate in data transmission. The primary gateway 801 sends the second packet to the user equipment through the antenna 801-1, and the first secondary gateway 803 sends the second packet to the user equipment through the antenna 803-2. The second packet includes the waveform information.

In this embodiment, the primary gateway participates in packet transmission. This increases a quantity of sending devices, to improve packet transmission efficiency and enhance signal transmission power.

The foregoing describes the data transmission method in embodiments of this application. The following describes a primary gateway and a secondary gateway in embodiments of this application. Refer to FIG. 10. An embodiment of a primary gateway according to an embodiment of this application includes:
a generation unit 1001, configured to generate a payload and cyclic shift diversity CSD information, where the CSD information includes first CSD information, and the first CSD information indicates time at which a first secondary gateway sends the payload; and
a first sending unit 1002, configured to send the payload and the CSD information to each of a plurality of secondary gateways, where the first secondary gateway is one of the plurality of secondary gateways.

Refer to FIG. 11. An embodiment of a secondary gateway according to an embodiment of this application includes:
a receiving unit 1101, configured to receive CSD information and a payload from a primary gateway, where the CSD information includes first CSD information, and the first CSD information indicates time at which a first secondary gateway sends the payload; and
a second sending unit 1102, configured to send the payload to user equipment based on the CSD information.

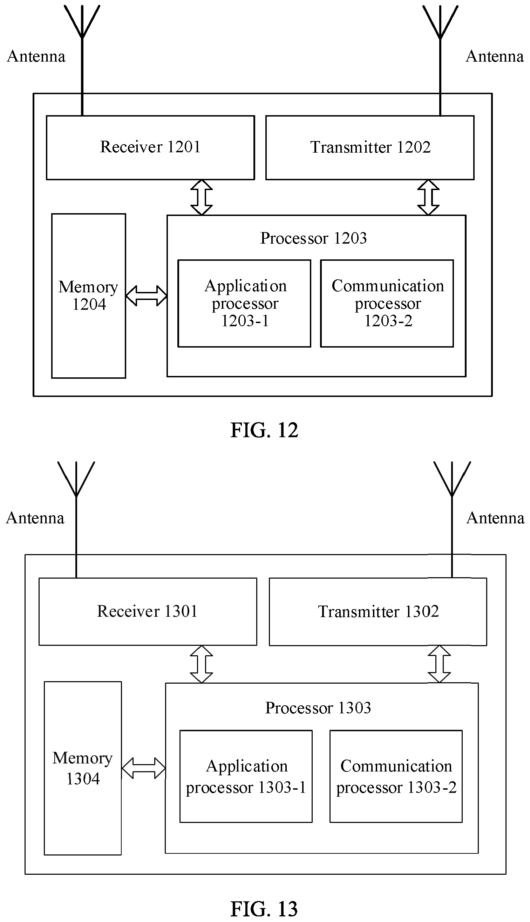

The following describes a primary gateway provided in embodiments of this application. FIG. 12 is a diagram of a structure of a primary gateway according to an embodiment of this application.

The primary gateway is specifically a communication device, including: a receiver 1201, a transmitter 1202, a processor 1203, and a memory 1204 (where there may be one or more processors 1203 in the primary gateway). The processor 1203 may include an application processor 1203-1 and a communication processor 1203-2. In some embodiments of this application, the receiver 1201, the transmitter 1202, the processor 1203, and the memory 1204 may be connected through a bus or in another manner.

In wireless communication, the receiver 1201 and the transmitter 1202 may be connected to an antenna. In wired communication, the receiver 1201 and the transmitter 1202 may be connected to a cable.

The memory 1204 may include a read-only memory and a random access memory, and provide instructions and data to the processor 1203. Apart of the memory 1204 may further include a non-volatile random access memory (non-volatile random access memory, NVRAM). The memory 1204 stores a processor and operation instructions, an executable module, or a data structure; or a subset thereof; or an extended set thereof. The operation instructions may include various operation instructions used to implement various operations.

The processor 1203 controls an operation of the primary gateway. In a specific application, the components of the primary gateway are coupled together through a bus system. In addition to a data bus, the bus system may further include a power bus, a control bus, a status signal bus, and the like. However, for clear description, various types of buses in the figure are referred to as the bus system.

The method in the foregoing embodiments may be applied to the processor 1203, or may be implemented by the processor 1203. The processor 1203 may be an integrated circuit chip and has a signal processing capability. In an implementation process, the steps in the foregoing method may be completed by using an integrated logic circuit of hardware in the processor 1203 or instructions in a form of software. The processor 1203 may be a general-purpose processor, a digital signal processor (digital signal processor, DSP), a microprocessor or a microcontroller, a vision processing unit (vision processing unit, VPU), a tensor processing unit (tensor processing unit, TPU), or another processor suitable for AI computing, and may further include an application-specific integrated circuit (application-specific integrated circuit, ASIC), a field programmable gate array (field programmable gate array, FPGA) or another programmable logic device, a discrete gate or a transistor logic device, or a discrete hardware component. The processor 1203 may implement or perform the methods, the steps, and the logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1204, and the processor 1203 reads information from the memory 1204, and performs the method based on the foregoing embodiments in combination with hardware of the processor 1203.

The receiver 1201 may be configured to receive input digital or character information, and generate a signal input related to related settings and function control of the execution device. The transmitter 1202 may be configured to output digital or character information through a first interface. The transmitter 1202 may be further configured to send instructions to a disk group through the first interface, to modify data in the disk group. The transmitter 1202 may further include a display device such as a display screen.

The following describes a secondary gateway provided in embodiments of this application. FIG. 13 is a diagram of a structure of a secondary gateway according to an embodiment of this application.

The secondary gateway is specifically a communication device, including: a receiver 1301, a transmitter 1302, a processor 1303, and a memory 1304 (where there may be one or more processors 1303 in the secondary gateway). The processor 1303 may include an application processor 1303-1 and a communication processor 1303-2. In some embodiments of this application, the receiver 1301, the transmitter 1302, the processor 1303, and the memory 1304 may be connected through a bus or in another manner.

In wireless communication, the receiver 1301 and the transmitter 1302 may be connected to an antenna. In wired communication, the receiver 1301 and the transmitter 1302 may be connected to a cable.

The memory 1304 may include a read-only memory and a random access memory, and provide instructions and data to the processor 1303. A part of the memory 1304 may further include an NVRAM. The memory 1304 stores a processor and operation instructions, an executable module, or a data structure; or a subset thereof; or an extended set thereof. The operation instructions may include various operation instructions used to implement various operations.

The processor 1303 controls an operation of the secondary gateway. In a specific application, the components of the secondary gateway are coupled together through a bus system. In addition to a data bus, the bus system may further include a power bus, a control bus, a status signal bus, and the like. However, for clear description, various types of buses in the figure are referred to as the bus system.

The method in the foregoing embodiments may be applied to the processor 1303, or may be implemented by the processor 1303. The processor 1303 may be an integrated circuit chip and has a signal processing capability. In an implementation process, the steps in the foregoing methods may be completed by using an integrated logic circuit of hardware in the processor 1303 or instructions in a form of software. The processor 1303 may be a general-purpose processor, a DSP, a microprocessor or a microcontroller, a VPU, a TPU, or another processor suitable for AI computing, and may further include an ASIC, an FPGA or another programmable logic device, a discrete gate or a transistor logic device, or a discrete hardware component. The processor 1303 may implement or perform the methods, the steps, and the logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1304, and the processor 1303 reads information from the memory 1304, and performs the method based on the foregoing embodiments in combination with hardware of the processor 1303.

The receiver 1301 may be configured to receive input digital or character information, and generate a signal input related to related settings and function control of the execution device. The transmitter 1302 may be configured to output digital or character information through a first interface. The transmitter 1302 may be further configured to send instructions to a disk group through the first interface, to modify data in the disk group. The transmitter 1302 may further include a display device such as a display screen.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the apparatus embodiments described above are merely examples. For example, division into the units is merely logical function division and another division manner may be used in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected according to actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (ROM, read-only memory), a random access memory (RAM, random access memory), a magnetic disk, or an optical disc.

## Claims

1. A data transmission method, wherein the method comprises:
generating, by a primary gateway, a first packet, wherein the first packet comprises a payload and cyclic shift diversity CSD information, the CSD information comprises first CSD information, and the first CSD information indicates time at which a first secondary gateway sends a second packet to user equipment; and
sending, by the primary gateway, the first packet to an optical splitter, wherein the optical splitter is configured to send the first packet obtained through optical splitting to each of a plurality of secondary gateways, and the first secondary gateway is one of the plurality of secondary gateways.

2. The data transmission method according to claim 1, wherein the payload comprises a digital waveform representation.

3. The data transmission method according to claim 2, wherein the CSD information comprises second CSD information, and the second CSD information indicates time at which the primary gateway sends the second packet to the user equipment; and
after the generating, by the primary gateway, the first packet, the method further comprises:
obtaining, by the primary gateway, waveform information based on the digital waveform representation; and
sending, by the primary gateway, the second packet to the user equipment based on the second CSD information, wherein the second packet comprises the waveform information.

4. The data transmission method according to any one of claims 1 to 3, wherein the CSD information further comprises third CSD information, the third CSD information indicates time at which a second secondary gateway sends the second packet, and the second secondary gateway is one of the plurality of secondary gateways; and
the generating, by the primary gateway, the first packet comprises:
receiving, by the primary gateway, first target duration from the first secondary gateway and second target duration from the second secondary gateway, wherein the first target duration indicates duration required for the first secondary gateway to send a signal to the user equipment, and the second target duration indicates duration required for the second secondary gateway to send a signal to the user equipment; and
determining, by the primary gateway, the third CSD information based on the first target duration, the second target duration, and the first CSD information, wherein the first CSD information and the third CSD information are used to cause the signal from the first secondary gateway and the signal from the second secondary gateway to arrive at the user equipment at different time.

5. The data transmission method according to any one of claims 1 to 4, wherein the first packet comprises a target identifier, the target identifier comprises a first antenna identifier, and the first antenna identifier indicates first antennas of the plurality of secondary gateways to send the second packet based on the CSD information.

6. The data transmission method according to any one of claims 1 to 4, wherein the first packet comprises a target identifier, the target identifier comprises a target secondary gateway identifier and a second antenna identifier, and the target secondary gateway identifier and the second antenna identifier indicate the first secondary gateway to send the second packet through a second antenna of the first secondary gateway based on the first CSD information.

7. The data transmission method according to claim 5 or 6, wherein the generating, by the primary gateway, the first packet comprises:
receiving, by the primary gateway, first network information from the plurality of secondary gateways, wherein the first network information comprises quality of a channel from each antenna of the plurality of secondary gateways to the user equipment; and
determining, by the primary gateway, the target identifier based on the first network information.

8. The data transmission method according to any one of claims 5 to 7, wherein the generating, by the primary gateway, the first packet comprises:
receiving, by the primary gateway, second network information from the plurality of secondary gateways, wherein the second network information comprises a channel state of each antenna of the plurality of secondary gateways; and
determining, by the primary gateway, the target identifier based on the second network information.

9. The data transmission method according to claim 8, wherein a channel state of the first antenna or the second antenna is an idle state.

10. A data transmission method, wherein the method comprises:
receiving, by a secondary gateway, a first packet from a primary gateway, wherein the first packet comprises a payload and CSD information;
obtaining, by the secondary gateway, a second packet based on the payload, wherein the CSD information indicates time at which the secondary gateway sends the second packet; and
sending, by the secondary gateway, the second packet to user equipment based on the CSD information.

11. The data transmission method according to claim 10, wherein the payload comprises a digital waveform representation.

12. The data transmission method according to claim 11, wherein the second packet comprises waveform information; and
the obtaining, by the secondary gateway, the second packet based on the payload comprises:
obtaining, by the secondary gateway, the waveform information based on the digital waveform representation.

13. The data transmission method according to any one of claims 10 to 12, wherein before the receiving, by the secondary gateway, the first packet from the primary gateway, the method further comprises:
sending, by the secondary gateway, target duration to the primary gateway, wherein the target duration indicates duration required for the secondary gateway to send a signal to the user equipment.

14. The data transmission method according to any one of claims 10 to 13, wherein before the receiving, by the secondary gateway, the first packet from the primary gateway, the method further comprises:
sending, by the secondary gateway, first network information to the primary gateway, wherein the first network information comprises quality of a channel from each antenna of the secondary gateway to the user equipment.

15. The data transmission method according to any one of claims 10 to 14, wherein before the receiving, by the secondary gateway, the first packet from the primary gateway, the method further comprises:
sending, by the secondary gateway, second network information to the primary gateway, wherein the second network information comprises a channel state of each antenna of the secondary gateway.

16. A primary gateway, comprising:
a processor, configured to execute a program, to cause the primary gateway to perform the method according to any one of claims 1 to 9.

17. A secondary gateway, comprising:
a processor, configured to execute a program, to cause the secondary gateway to perform the method according to any one of claims 10 to 15.

18. A data transmission system, comprising:
an optical splitter, configured to connect a primary gateway and a secondary gateway, wherein the primary gateway is connected to an input port of the optical splitter, and an output port of the optical splitter is connected to the secondary gateway;
the primary gateway, configured to generate a first packet, wherein the first packet comprises a payload and cyclic shift diversity CSD information, the CSD information comprises first CSD information, and the first CSD information indicates time at which a first secondary gateway sends a second packet to user equipment, wherein
the primary gateway is further configured to send the first packet to the optical splitter, the optical splitter is configured to send the first packet obtained through optical splitting to each of a plurality of secondary gateways, and the first secondary gateway is one of the plurality of secondary gateways; and
the secondary gateway, configured to receive the first packet from the primary gateway, wherein the first packet comprises the payload and the CSD information, wherein
the secondary gateway is further configured to obtain the second packet based on the payload, wherein the CSD information indicates time at which the secondary gateway sends the second packet; and
the secondary gateway is further configured to send the second packet to the user equipment based on the CSD information.

19. A computer-readable storage medium, comprising instructions, wherein when the instructions are run on a computer, the computer is caused to perform the method according to any one of claims 1 to 9, or the computer is caused to perform the method according to any one of claims 10 to 15.
